# EUROPÄISCHE PATENTSCHRIFT

(11) **EP 1 923 195 B1**
(45) Veröffentlichungstag und Bekanntmachung des Hinweises auf die Patenterteilung: **05.01.2011**
(21) Anmeldenummer: 07017528.6
(22) Anmeldetag: 07.09.2007
(51) Int. Cl.: B29C 45/27, B29C 45/38

(54) **Verfahren und Vorrichtung zur Vermeidung von Angiessüberständen und -vertiefungen beim Spritzgiessen**
Method and device for avoiding projections and depressions during injection moulding
Dispositif et procédé destinés à éviter les projections et les creusements de coulée lors du moulage par injection

(30) Priorität: 16.11.2006 DE 102006054458
(43) Veröffentlichungstag der Anmeldung: 21.05.2008
(73) Patentinhaber: AKO-Kunststoffe Alfred Kolb GmbH, 74889 Sinsheim-Hoffenheim (DE)
(72) Erfinder: Müller, Werner, 74918 Angelbachtal (DE)
(74) Vertreter: Geitz Truckenmüller Lucht

(56) Entgegenhaltungen:
- DE-A1-102005 013 236
- DE-B- 1 073 157
- JP-A- 1 310 926
- JP-A- 2 164 510
- JP-A- 62 025 026
- US-A- 4 952 354

## Beschreibung

Die Erfindung betrifft eine Vorrichtung zur Herstellung von Formteilen mittels eines Spritzgießverfahrens, wobei ein Kanal zur Leitung einer Kunststoffschmelze über wenigstens eine Zuführung und jeweils zumindest einen in einer Drehverteilerdüse geführten Ausflusskanal hin zu wenigstens einem Anspritzpunkt einer Formschale eröffnet ist, wobei die Drehverteilerdüse drehbar gelagert ist, die drehbare Lagerung der Drehverteilerdüse eine Verdrehung dieses zumindest einen Ausflusskanals gegen den wenigstens einen Anspritzpunkt der Formschale erlaubt.

Eine solche Vorrichtung ist aus dem US-Patent Nr. 4,952,354 bekannt. Diese Schrift beschreibt ein Verfahren zur Entfernung von Angussstellen an durch Spritzguss herdestellten Kunststoffteilen. Eine mit Kunststoffschmelze gefüllte Kavität wird erfindungsgemäß nach dem Erkalten des Kunststoffs relativ zu einem Trennelement verdreht, sodass der Anguss von dem Spritzgussteil aufgrund des Verdrehens abgeschert wird.

Aus der Auslegeschrift DE 1 073 157 ist es ferner bekannt, einen Schieber vorzusehen, welcher zumindest einen Teil eines Angusskanals aufnimmt, welcher Schieber nach dem Erkalten der Kunststoffschmelze zur Abscherung des Angusses gegenüber dem Spritzgussteil verschoben wird.

Eine weitere Spritzeinheit für Anlagen zur Verarbeitung thermoplastischer Kunststoffe, keramischer oder metallischer Massen ist aus der DE 103 07 616 bekannt. Bei der vorbekannten Vorrichtung gelangt die Schmelze direkt in eine rotierende Hohlspindel und von dieser durch mindestens einen radial nach außen geführten Verteilerkanal zu den im Formhohlraum mündenden Düsen. Die Hohlspindel erfüllt dabei zwei Aufgaben, nämlich die Leitung des Schmelzstroms zu mindestens zwei Kanälen und die Unterbrechung des Schmelzstroms zur Erzeugung einer Pulsation. Hierdurch soll sich der Aufwand für die Abdichtung und Wärmedämmung der Spritzeinheit reduzieren sowie der Steuer- und Regelaufwand für die Synchronisation der Rotation von zwei Ventilnadeln bzw. Drehschiebern, die den Formhohlraum mit Schmelze versorgen.

Auch solche Verfahren sind bereits seit längerem bekannt. Insbesondere wird bei der Herstellung von Formteilen mittels eines Spritzgießverfahrens die Kunststoffschmelze über eine oder mehrere Zuführungen eingespritzt, wobei zur Vermeidung von sichtbaren Angussüberständen und/oder -vertiefungen die Anspritzrichtung so gewählt wird, dass diese vorzugsweise auf der Formteilinnenseite entstehen und beim Öffnen der Form oder beim Ausstoßen des Teils aus der Kavität vom Anguss abgetrennt werden. Man spricht dabei von einer Unterfluranspritzung, bei der die Sichtseite des Formteils gegen die Formschale anliegt und von der Gegenseite her angespritzt wird. Es wird damit allerdings lediglich die Sichtbarkeit der entstehenden Angussüberstände und -vertiefungen vermieden, jedoch letzten Endes nicht deren tatsächliches Entstehen.

Gerade bei dünnen, flächigen Formteilen, bei denen teilweise besonders große Anspritzpunkte erforderlich sind, kann es beim Trennen von Formteil und Anguss zu einem Einreißen der Fläche des Formteils kommen, wodurch das Formteil irreparabel verloren ist. Auch soweit dieser schlimmste Fall nicht eintritt, stellt es doch zumindest einen zusätzlichen Arbeitsschritt mit Beschädigungsrisiko dar, den Angussüberstand nach einer Trennung des Angusses von dem Formteil zu entfernen.

Vor diesem Hintergrund liegt der vorliegenden Erfindung die Aufgabe zu Grunde, ein Verfahren und eine Vorrichtung zur Herstellung von Formteilen unter Vermeidung von Angussüberständen und -vertiefungen beim Spritzgießen zu schaffen, welche eine saubere Trennung von Anguss und Formteil ermöglichen und insbesondere einen zusätzlichen Arbeitsgang ersparen.

Gelöst wird diese Aufgabe durch eine Vorrichtung zur Herstellung von Formteilen mittels eines Spritzgießverfahrens gemäß den Merkmalen des Hauptanspruchs sowie durch ein entsprechendes Verfahren gemäß den Merkmalen des nebengeordneten Anspruchs 19. Weitere sinnvolle Ausgestaltungen von Vorrichtung und Verfahren können den Unteransprüchen entnommen werden.

Erfindungsgemäß weist eine Vorrichtung zur Herstellung von Formteilen eine Zuführung auf, über welche die Kunststoffschmelze, welche das für das Formteil erforderliche Material darstellt, in eine Drehverteilerdüse einspritzt. Die Drehverteilerdüse verfügt über einen oder mehrere Ausflusskanäle, welche die üblicherweise in geodätischer Hinsicht von oben heranströmende Kunststoffschmelze umlenken und so eine Unterfluranspritzung ermöglichen. Die Drehverteilerdüse ist dabei um ihre Längsachse drehbar gelagert, so dass der von der Zuführung über die Ausflusskanäle bis hin zur Formschale eröffnete Kanal zum Transport der Kunststoffschmelze zwischen Ausflusskanal und Formschale geschlossen werden kann. Nach dem Füllen der Formschale mit Kunststoffschmelze und vor dem Öffnen des Werkzeugs vollzieht die Drehverteilerdüse eine Drehung, vorzugsweise um den einfachen Weg des Angussquerschnitts. Durch diesen Effekt erfolgt eine Abscherung des noch im Ausflusskanal befindlichen Materials, so dass bereits in diesem Moment eine saubere Abtrennung von Anguss und Formteil gewährleistet ist. In einem weiteren Schritt wird die Formschale, bestehend aus einer auswerferseitigen und einer spritzseitigen Formplatte, unter Freigabe des Formteils geöffnet, wonach das Formteil entnommen werden kann. Eine Trennung von Formteil und Anguss in einem zusätzlichen Arbeitsschritt entfällt.

Zur Gewährleistung einer besonders sauberen Formteilaußenseite kann auch hier mit Vorteil die bekannte Unterfluranspritzung angewandt werden, so dass auch die sauber abgescherten Anspritzpunkte des Formteils nicht auf der Formteilaußenseite, mithin der Sichtseite, wahrgenommen werden können. Die Kunststoffschmelze kann wahlweise über einen Kaltkanal oder über eine Heizdüse (bzw. einen Heißkanalverteiler bei Verwendung mehrerer Drehverteilerdüsen) der Drehverteilerdüse zugeführt werden. Die Formplatten sind so angeordnet, dass das durch Spritzgießen entstehende Formteil durch Trennung der Formplatten, mithin üblicherweise ein vertikales Auseinanderziehen, freigegeben wird und anschließend entnommen werden kann.

Abhängig von dem jeweiligen Einsatzgebiet können der Vorrichtung auch mehrere Drehverteilerdüsen zugeordnet sein, so dass an Stelle einer herkömmlichen, einkanaligen Zuführung auch ein Verteiler, gegebenenfalls etwa ein Heißkanalverteiler, im Bereich der spritzseitigen Formplatte zugeordnet sein kann. Auf diese Art und Weise können etwa längliche oder auch flächige Formteile gespritzt werden, bei denen mehrere Anspritzpunkte vorhanden sind.

Die Drehverteilerdüse ist auf ihrer von der auswerferseitigen Formplatte abgewandten Seite mit Vorteil in einer Lagerbuchse aufgenommen, welche die Drehung der Drehverteilerdüse zum Zwecke der Abscherung des Angusses erleichtert beziehungsweise ermöglicht.

Der Drehverteilerdüse ist ferner in Richtung ihrer Längserstreckung, vorzugsweise im Bereich ihrer Längsachse, ein Auswerferkanal einbeschrieben. Der Auswerferkanal mündet in die der Drehverteilerdüse zugeordneten Ausflusskanäle und kann mit diesen kommunizieren, so dass die in die Ausflusskanäle und in Richtung der Formschalen eingespritzte Kunststoffschmelze teilweise auch in den Auswerferkanal einströmt. Im Auswerferkanal ist ein Angussauswerfer aufgenommen, welcher nach dem Öffnen der Formplatten für ein Auswerfen des Angusses benutzt werden kann. Er ist länglich gebildet, wobei er den Auswerferkanal im wesentlichen füllt, und in dem Auswerferkanal längsverschieblich gelagert. Durch ein Verschieben des Angussauswerfers in Richtung des sich noch im Auswerferkanal befindlichen Angusses wird dieser als Ganzes bei geöffneten Formplatten aus dem Auswerferkanal - und aufgrund des Zusammenhalts des Kunststoffs auch aus den Ausflusskanälen - herausgezogen und kann entnommen werden. Nach dem Auswerfen wird der Angussauswerfer wieder in seine ursprüngliche Position verbracht.

Der Angussauswerfer ist im Bereich seines von der Formplatte abgewandten Endes in einer Auswerferaufnahme gehalten, mittels derer er entlang seiner Längsrichtung verschieblich ist. Die Auswerferaufnahme greift dazu in eine Ausnehmung der Drehverteilerdüse, welche zu diesem Zwecke, vorzugsweise keilförmig, bis zum Auswerferkanal eingetrieben ist. In einer bevorzugten Ausgestaltung ist die Ausnehmung vollständig durch die Drehverteilerdüse hindurchgeführt. In diesem Fall hat sie einen im Wesentlichen doppelkeilförmigen Querschnitt. Durch diese Keilförmigkeit der Ausnehmung ist es ermöglicht, dass trotz der erfindungsgemäßen Drehung der Drehverteilerdüse die Auswerferaufnahme radial starr angeordnet sein kann. Die Drehung erfolgt nur im Rahmen des durch die keilförmig ausgebildete Ausnehmung eröffneten Winkels.

Der Auswurf des Angusses erfolgt also mittels des Angussauswerfers und seiner Auswerferaufnahme, wobei Angussauswurf und Teileauswurf, also der Auswurf des Formteils, vorzugsweise gleichzeitig erfolgen, so dass kein getrennter Arbeitsschritt erforderlich ist.

Die zur Drehung der Drehverteilerdüse erforderliche Kraft wird in bevorzugter Ausgestaltung von einem Hydraulikzylinder oder einem Pneumatikzylinder geliefert und mittels einer Zahnstange oder eines Drehgelenks auf die Drehverteilerdüse übertragen.

Der Prozess der Drehung kann dabei, wie auch der Rest des Verfahrens, mittels einer Vorrichtungssteuerung gelenkt werden, wozu die Kernzugfunktion der Spritzgießmaschinensteuerung verwendet werden kann.

Die vorstehend beschriebene Erfindung wird im Folgenden anhand eines Ausführungsbeispiels näher erläutert.

Es zeigen:
- Fig. 1: ein Ausschnitt eines Spritzgießwerkzeug mit einer drehbar gelagerten Drehver- teilerdüse und zwei Formplatten in ei- ner seitlichen Schnittdarstellung,
- Fig. 2: eine Schnittdarstellung der Drehvertei- lerdüse aus Fig. 1,
- Fig. 3: eine seitlich verdrehte Seitenansicht der Drehverteilerdüse aus Fig. 1, und
- Fig. 4: eine Draufsicht auf die Stirnseite der Drehverteilerdüse aus Fig. 1.

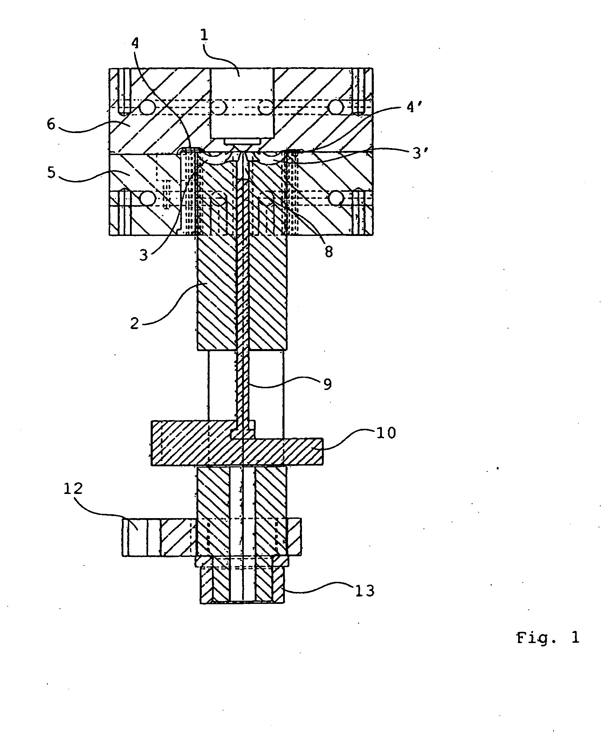

Figur 1 zeigt eine Vorrichtung zur Herstellung von Formteilen, welche eine auswerferseitige Formplatte 5 und eine spritzseitige Formplatte 6 aufweist, zwischen denen ein Formteil durch Spritzguss hergestellt werden kann. Zu diesem Zwecke weisen die beiden Formplatten 5,6 Kavitäten auf, welche Formschalen 4,4' in Form des herzustellenden Formteils aufweisen. Diese Formschalen gilt es, von einer Zuführung 1, über welche die formgebende Kunststoffschmelze bereitgestellt wird, zu speisen. Dies erfolgt über eine Drehverteilerdüse 2, welche stirnseitig mit Ausflusskanälen 3, 3' an der Zuführung 1 ansetzt und über diese Ausflusskanäle 3,3' die Kunststoffschmelze in die Formschalen 4,4' leitet. Die in der Schnittzeichnung der Figur 1 gezeigte Anordnung kann sich in verschiedenen Ebenen wiederholen, wenn das herzustellende Formteil den Einsatz mehrerer Zuführungen und/oder Drehverteilerdüsen erfordert, mithin also mehrere Anspritzpunkte benötigt.

Die über Zuführung 1 und Ausflusskanäle 3,3' der Drehverteilerdüse 2 in die Formschalen 4,4' geflossene Kunststoffschmelze bildet in den Formschalen 4,4' das herzustellende Formteil, welches jedoch zunächst noch mit den Ausflusskanälen 3,3' in Verbindung steht. Um den Anguss zu entfernen wird nunmehr die Drehverteilerdüse um ihre Längsachse gedreht, bis die Ausflusskanäle 3,3' um mindestens eine Angussquerschnittslänge von der Einspritzposition weg verdreht sind. Das Material wird durch die genannte Bewegung abgeschert, wobei ein rückstandsloser Abschluss der Anspritzpunkte gewährleistet ist.

Nach der Fertigstellung des Formteils werden die Formplatten 5,6 unter Freigabe der in den Formschalen 4,4' aufgenommenen Formteile auseinander gezogen und das Formteil wird ausgeworfen. Eine Nachbearbeitung der Anspritzpunkte ist aufgrund der Abscherung des Angussmaterials nicht erforderlich und kann somit entfallen. Parallel zu dem Auswurf des Formteils wird auch der Anguss ausgeworfen. Hierzu ist der Drehverteilerdüse 2 ein Auswerferkanal 8 zugeordnet, welcher im Bereich der Längsachse der Drehverteilerdüse angeordnet ist und mit den Ausflusskanälen 3,3' kommuniziert. Das in den Ausflusskanälen 3,3' und im Auswerferkanal 8 erstarrte Material wird mittels eines Angussauswerfers 9 ausgestoßen, welcher längsverschieblich in dem Auswerferkanal 8 aufgenommen ist. Durch den Ausstoß des Materials aus dem Auswerferkanal 8 wird auch das diesem Material noch anverbundene Material aus den Ausflusskanälen 3,3' herausgezogen, so dass die Drehverteilerdüse im Folgenden wieder materialfrei ist. Der Angussauswerfer 9 ist im von den Formplatten 5,6 abgewandten Endbereich in einer Auswerferaufnahme 10 aufgenommen, welche den Angussauswerfer 9 durch eine Ausnehmung 11 in der Drehverteilerdüse 2 hält.

Die Drehung der Drehverteilerdüse 2 wird vorzugsweise von einem herkömmlichen Hydraulikzylinder oder einem Pneumatikzylinder bewirkt, wobei diese Kraft von einer Zahnstange oder, wie in Figur 1 gezeigt, von einem Drehgelenk 12 übertragen wird. Für eine präzise Drehung und Lagerung ist durch eine Lagerbuchse 13 gesorgt, in der die Drehverteilerdüse 2 an ihrer von den Formplatten 5,6 abgewandten Seite aufgenommen ist.

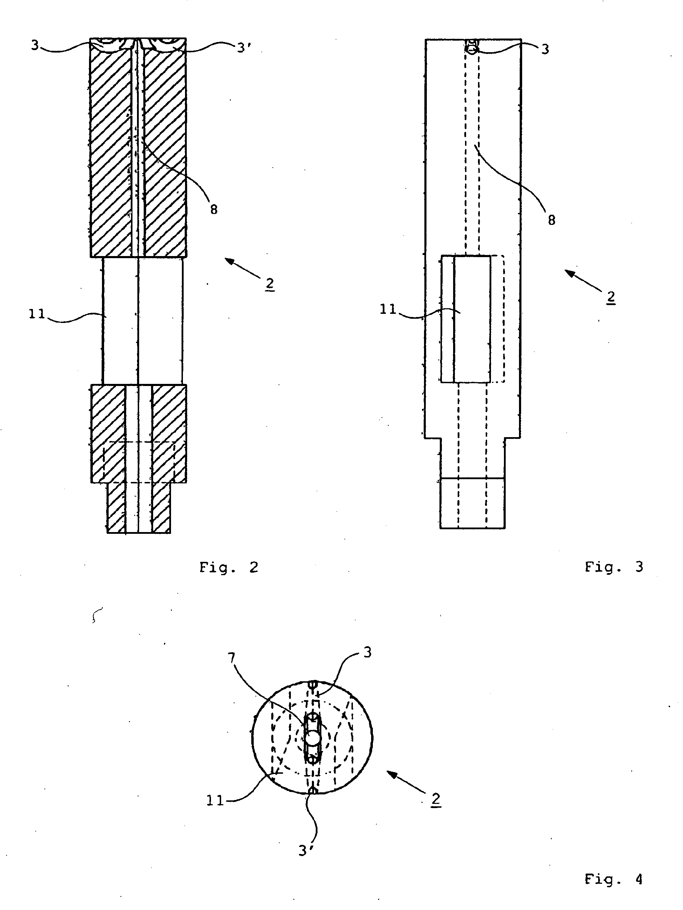

Figur 2 zeigt die Drehverteilerdüse 2 in einer Schnittdarstellung, wobei hier insbesondere die Ausnehmung 11 zum Eingriff in den Auswerferkanal 8 erkennbar ist. Die Ausnehmung ist, wie insbesondere auch in Figur 4 gezeigt ist, doppelkeilförmig angelegt, so dass bei eingreifender Auswerferaufnahme 10 die erforderliche Drehung der Drehverteilerdüse 2 nicht verhindert ist. Auf diese Weise liegt folglich die Auswerferaufnahme 10 allenfalls an einer Seite der Ausnehmung 11 an, niemals hingegen an beiden Seiten gleichzeitig.

Das Prinzip dieser Ausnehmung 11, welche vorliegend durch die Drehverteilerdüse 2 hindurchgreift, ist anschaulicher in den Figuren 3 und 4 dargestellt, wobei insbesondere in Figur 4 die Doppelkeilform der Ausnehmung anhand gestrichelter Linien verdeutlicht wird.

Vorstehend ist somit ein Verfahren und eine Vorrichtung zur Vermeidung von Angießüberständen und -vertiefungen beim Spritzgießen beschrieben, welche mittels einer drehbaren Drehverteilerdüse eine Abscherung des Angusses von dem Formteil noch vor dessen Entnahme aus der Formschale vorsieht und somit auf ein nachträgliches Entfernen von Überständen verzichten kann.

### BEZUGSZEICHENLISTE

- 1: Zuführung
- 2: Drehverteilerdüse
- 3,3': Ausflusskanal
- 4,4': Formschale
- 5: Auswerferseitige Formplatte
- 6: Spritzseitige Formplatte
- 7: Angießdüseneintritt
- 8: Auswerferkanal
- 9: Angussauswerfer
- 10: Auswerferaufnahme
- 11: Ausnehmung
- 12: Drehgelenk
- 13: Lagerbuchse

## Patentansprüche

1. Vorrichtung zur Herstellung von Formteilen mittels eines Spritzgießverfahrens, wobei ein Kanal zur Leitung einer Kunststoffschmelze über wenigstens eine Zuführung (1) und jeweils zumindest einen in einer Drehverteilerdüse (2) geführten Ausflusskanal (3,3') hin zu wenigstens einem Anspritzpunkt einer Formschale (4,4') eröffnet ist, wobei die Drehverteilerdüse (2) drehbar gelagert ist, die drehbare Lagerung der Drehverteilerdüse (2) eine Verdrehung dieses zumindest einen Ausflusskanals (3,3') gegen den wenigstens einen Anspritzpunkt der Formschale (4,4') erlaubt,
**dadurch gekennzeichnet, dass** der wenigstens eine Ausflusskanal (3,3') zwischen einem Angießdüseneintritt (7) und einer zugehörigen radial außen liegenden Öffnung des Ausflusskanals (3,3') vom Material der Drehverteilerdüse (2) bedeckt ist, um die heranströmende Kunststoffschmelze zur Realisierung einer Unterfluranspritzung umzulenken.

2. Vorrichtung gemäß Anspruch 1, **dadurch gekennzeichnet, dass** die Drehverteilerdüse (2) zumindest um eine Angussquerschnittslänge verdrehbar ist.

3. Vorrichtung gemäß einem der Ansprüche 1 oder 2, **dadurch gekennzeichnet, dass** die Drehverteilerdüse (2) zur Verwirklichung einer Unterfluranspritzung auswerferseitig, insbesondere bezüglich der Formschale (4,4') formteilinnenseitig angeordnet ist.

4. Vorrichtung gemäß einem der vorhergehenden Ansprüche, **dadurch gekennzeichnet, dass** die Formschale (4,4') aus einer spritzseitigen und einer auswurfseitigen Formplatte (5,6) zusammengefügt ist, welche zum Zwecke des Teileauswurfs unter Freigabe des Formteils voneinander trennbar sind.

5. Vorrichtung gemäß Anspruch 4, **dadurch gekennzeichnet, dass** die wenigstens eine Zuführung (1) in der spritzseitigen Formplatte (6) aufgenommen ist.

6. Vorrichtung gemäß einem der Ansprüche 4 oder 5, **dadurch gekennzeichnet, dass** die wenigstens eine Drehverteilerdüse (2) in der auswurfseitigen Formplatte (5) aufgenommen ist.

7. Vorrichtung gemäß einem der vorhergehenden Ansprüche, **dadurch gekennzeichnet, dass** die Zuführung (1) als Heizdüse oder als Kaltkanal ausgeführt ist.

8. Vorrichtung gemäß einem der vorhergehenden Ansprüche, **dadurch gekennzeichnet, dass** zur Verteilung der Kunststoffschmelze an mehrere Drehverteilerdüsen (2) ein Verteiler, etwa ein Heißkanalverteiler, im Bereich der spritzseitigen Formplatte (6) angeordnet ist.

9. Vorrichtung gemäß einem der vorhergehenden Ansprüche, **dadurch gekennzeichnet, dass** die Drehverteilerdüse (2) in einem Bereich ihrer von der auswerferseitigen Formplatte (5) abgewandten Seite in einer Lagerbuchse (13) drehbar gelagert ist.

10. Vorrichtung gemäß einem der vorhergehenden Ansprüche, **dadurch gekennzeichnet, dass** der Drehverteilerdüse (2) in Richtung ihrer Längserstreckung, vorzugsweise im Bereich ihrer Längsachse, ein innen liegender Auswerferkanal (8) einbeschrieben ist, in welchem ein Angussauswerfer (9) zum Ausstoßen des Angusses aus dem zumindest einen Ausflusskanal (3,3') der Drehverteilerdüse (2) aufgenommen ist.

11. Vorrichtung gemäß Anspruch 10, **dadurch gekennzeichnet, dass** der Angussauswerfer (9) in dem Auswerferkanal (8) längsverschieblich gelagert ist.

12. Vorrichtung gemäß Anspruch 11, **dadurch gekennzeichnet, dass** der Auswerferkanal (8) im von der auswerferseitigen Formplatte (5) abgewandten Endbereich des Angussauswerfers (9) durch wenigstens eine seitlich in die Drehverteilerdüse (2) einbeschriebene Ausnehmung (11), vorzugsweise die Drehverteilerdüse (2) durchgreifend, eingreifbar ist.

13. Vorrichtung gemäß Anspruch 12, **dadurch gekennzeichnet, dass** der Angussauswerfer (9) von einer Auswerferaufnahme (10) gehalten ist, welche zur Betätigung des Angussauswerfers (9), mithin dessen Längsverschiebung entlang des Auswerferkanals (8), geeignet ist, wobei die Auswerferaufnahme (10) in die Ausnehmung (11) eingreift.

14. Vorrichtung gemäß Anspruch 13, **dadurch gekennzeichnet, dass** die Ausnehmung (12) der Drehverteilerdüse (2) derart keilförmig bzw. doppelkeilförmig ausgeführt ist, dass eine Drehung der Drehverteilerdüse (2) trotz einer starren Lagerung der Auswerferaufnahme (10) nicht behindert ist.

15. Vorrichtung gemäß einem der vorhergehenden Ansprüche, **dadurch gekennzeichnet, dass** ein Teileauswurf der Formteile aus den Formschalen (4,4') mit einem AngussAuswurf synchronisiert ist.

16. Vorrichtung gemäß einem der vorhergehenden Ansprüche, **dadurch gekennzeichnet, dass** ein Hydraulikzylinder oder ein Pneumatikzylinder als Drehgeber für die Drehverteilerdüse (2) eingesetzt sind.

17. Vorrichtung gemäß Anspruch 16, **dadurch gekennzeichnet, dass** zur Drehung der Drehverteilerdüse (2) erforderliche Kraft mittels eines Drehgelenks (12) oder einer Zahnstange übertragbar ist.

18. Vorrichtung gemäß einem der Ansprüche 16 oder 17, **dadurch gekennzeichnet, dass** der zumindest eine Drehgeber der wenigstens einen Drehverteilerdüse (2) in Signalverbindung mit einer zentralen Vorrichtungssteuerung, vorzugsweise der Kernzugfunktion der Spritzgießmaschinensteuerung, steht.

19. Verfahren zur Herstellung von Formteilen mittels eines Spritzgießverfahrens, wobei eine Kunststoffschmelze über wenigstens eine Zuführung (1) und jeweils zumindest einen in einer Drehverteilerdüse (2) geführten Ausflusskanal (3,3') hin zu wenigstens einem Anspritzpunkt einer Formschale (4, 4') geleitet wird, wobei der wenigstens eine Ausflusskanal (3,3') der zumindest einen Drehverteilerdüse (2) nach einem Herstellungsvorgang aus dem Bereich des wenigstens einen Anspritzpunkts der zumindest einen Formschale (4,4') herausgedreht wird,
**dadurch gekennzeichnet, dass** der wenigstens eine Ausflusskanal (3,3') zwischen einem Angießdüseneintritt (7) und einer zugehörigen radial außen liegenden Öffnung des Ausflusskanals (3,3') vom Material der Drehverteilerdüse (2) bedeckt wird, um die heranströmende Kunststoffschmelze zur Realisierung einer Unterfluranspritzung umzulenken.

20. Verfahren gemäß Anspruch 19, **dadurch gekennzeichnet, dass** die Drehverteilerdüse (2) zumindest um eine Angussquerschnittslänge verdreht wird.

21. Verfahren gemäß einem der Ansprüche 19 oder 20, **dadurch gekennzeichnet, dass** die Anspritzung auswerferseitig, insbesondere bezüglich der wenigstens einen Formschale (4,4') formteilinnenseitig durchgeführt wird.

22. Verfahren gemäß einem der Ansprüche 19 bis 21, **dadurch gekennzeichnet, dass** das aus auswerferseitiger und spritzseitiger Formplatte (5,6) bestehende Spritzgießwerkzeug nach dem Anspritzen geöffnet und das Formteil entnommen wird.

23. Verfahren gemäß Anspruch 22, **dadurch gekennzeichnet, dass** nach dem Öffnen des Spritzgießwerkzeugs der in dem zumindest einen Ausflusskanal (3,3') verbliebene Anguss durch Längsverschieben eines längsverschieblich in der Drehverteilerdüse (2) aufgenommenen Angussauswerfers (9) in Richtung der Zuführung (1) ausgeworfen wird.

24. Verfahren gemäß Anspruch 23, **dadurch gekennzeichnet, dass** Teileauswurf und Angussauswurf synchron durchgeführt werden.

## Claims

1. An apparatus for producing molded parts by means of an injection-molding method, with one conduit being opened for guiding a plastic melt via at least one feeder (1) and respectively at least one outflow conduit (3, 3') being guided in a rotary distributor nozzle (2) is opened towards at least one injection point of a mold shell (4, 4'), with the rotary distributor nozzle (2) being held in a rotatable manner, the rotatable bearing of the rotary distributor nozzle (2) permitting a rotation of said at least one outflow conduit (3, 3') towards the at least one injection point of the mold shell (4, 4'), **characterized in that** the at least one outflow conduit (3, 3') is covered by the material of the rotary distributor nozzle (2) between a feed nozzle inlet (7) and an associated opening of the outflow conduit (3, 3') disposed radially on the outside in order to deflect the incoming plastic melt in order to realize tunnel gating.

2. An apparatus according to claim 1, **characterized in that** the rotary distributor nozzle (2) is rotatable at least about a cross-sectional length of a sprue.

3. An apparatus according to one of the claims 1 or 2, **characterized in that** the rotary distributor nozzle (2) is arranged on the ejector side for realizing tunnel gating, and especially on the inside of the molded part with respect to the mold shell (4, 4').

4. An apparatus according to one of the preceding claims, **characterized in that** the mold shell (4, 4') is joined from a molding plate (5, 6) on the injection side and the ejection side, which molding plates can be separated from one another for the purpose of partial ejection by releasing the molded part.

5. An apparatus according to claim 4, **characterized in that** the at least one feeder (1) is accommodated in the mold plate (6) on the injection side.

6. An apparatus according to one of the claims 4 or 5, **characterized in that** the at least one rotary distributor nozzle (2) is accommodated in the mold plate (5) on the ejection side.

7. An apparatus according to one of the preceding claims, **characterized in that** the feeder (1) is arranged as a heating nozzle or cold runner.

8. An apparatus according to one of the preceding claims, **characterized in that** a distributor such as a hot runner distributor is arranged in the region of the mold plate (6) on the injection side for distributing the plastic melt to several rotary distributor nozzles (2).

9. An apparatus according to one of the preceding claims, **characterized in that** the rotary distributor nozzle (2) is rotatably held in a bearing bush (13) in a region of its side facing away from the mold plate (5) on the ejector side.

10. An apparatus according to one of the preceding claims, **characterized in that** an inwardly disposed ejector conduit (8) is incorporated in the rotary distributor nozzle (2) in the direction of its longitudinal extension, preferably in the region of its longitudinal axis, in which a sprue ejector (9) is accommodated for ejecting the sprue from the at least one outflow conduit (3, 3') of the rotary distributor nozzle (2).

11. An apparatus according to claim 10, **characterized in that** the sprue ejector (9) is held to be longitudinally displaceable in the ejector conduit (8).

12. An apparatus according to claim 11, **characterized in that** in the end region of the sprue ejector (9) which faces away from the mold plate (5) on the ejector side the ejector conduit (8) can be engaged by at least one recess (11) incorporated laterally in the rotary distributor nozzle (2), preferably engaging through the rotary distributor nozzle (2).

13. An apparatus according to claim 12, **characterized in that** the sprue ejector (9) is held by an ejector receiver (10) which is suitable for actuating the sprue ejector (9), and therefore its longitudinal displacement along the ejector conduit (8), with the ejector receiver (10) engaging in the recess (11).

14. An apparatus according to claim 13, **characterized in that** the recess (12) of the rotary distributor nozzle (2) is arranged in a wedge-like or double-wedge-like manner that a rotation of the rotary distributor nozzle (2) is not obstructed despite a rigid mounting of the ejector receiver (10).

15. An apparatus according to one of the preceding claims, **characterized in that** an ejection of the molded parts from the mold shells (4, 4') is synchronized with an ejection of sprues.

16. An apparatus according to one of the preceding claims, **characterized in that** a hydraulic cylinder or a pneumatic cylinder is used as a rotary encoder for the rotary distributor nozzle (2).

17. An apparatus according to claim 16, **characterized in that** the force required for rotating the rotary distributor nozzle (2) can be transferred by means of a pivot joint (12) or a rack.

18. An apparatus according to one of the claims 16 or 17, **characterized in that** the at least one rotary encoder of the at least one rotary distributor nozzle (2) is in signal connection with a central apparatus control unit, preferably the core-pull function of the control unit of the injection-molding machine.

19. A method for producing molded parts by means of an injection-molding method, with a plastic melt being guided via at least one feeder (1) and at least one outflow conduit (3, 3') guided in a rotary distributor nozzle (2) towards at least one injection point of a mold shell (4, 4'), with the at least one outflow conduit (3, 3') of the at least one rotary distributor nozzle (2) being twisted out of the region of the at least one injection point of the at least one mold shell (4, 4') after a production process, **characterized in that** the at least one outflow conduit (3, 3') is covered by the material of the rotary distributor nozzle (2) between a sprue nozzle inlet (7) and an associated, radially outwardly disposed opening of the outflow conduit (3, 3') in order to deflect the incoming plastic melt for realizing tunnel gating.

20. A method according to claim 19, **characterized in that** the rotary distributor nozzle (2) is twisted at least about a cross-sectional length of the sprue.

21. A method according to one of the claims 19 or 20, **characterized in that** the injection is performed on the ejector side, and on the inside of the molded part especially with respect to the at least one mold shell (4, 4').

22. A method according to one of the claims 19 to 21, **characterized in that** the injection-molding die consisting of the mold plate (5, 6) on the ejector side and injection side is opened after the gating and the molded part is removed.

23. A method according to claim 22, **characterized in that** after the opening of the injection-molding die the sprue remaining in the at least one outflow conduit (3, 3') is ejected by longitudinal displacement by means of a sprue ejector (9) in the direction of the feeder (1), which ejector is received in a longitudinally displaceable manner in the rotary distributor nozzle (2).

24. A method according to claim 23, **characterized in that** the ejection of the parts and the sprue are performed synchronously.

## Revendications

1. Dispositif pour la fabrication de pièces moulées au moyen d'un procédé de moulage par injection, dans lequel un canal destiné à acheminer une matière plastique fondue est ouvert par au moins une alimentation (1) respectivement au moins un canal de sortie (3, 3') guidé dans une buse de distribution rotative (2) menant à au moins un point d'injection d'une coquille de moule (4, 4'), la buse de distribution rotative (2) étant supportée avec possibilité de rotation, le support rotatif de la buse de distribution rotative (2) permettant une rotation de cet au moins un canal de sortie (3, 3') vers l'au moins un point d'injection de la coquille de moule (4, 4'),
**caractérisé en ce que** l'au moins un canal de sortie (3, 3') est recouvert, entre une entrée de buse d'injection (7) et une ouverture extérieure dans le sens radial correspondante du canal de sortie (3, 3'), par le matériau de la buse de distribution rotative (2), afin de dévier la matière plastique fondue accourant pour réaliser une injection par le fond.

2. Dispositif selon la revendication 1, **caractérisé en ce que** la buse de distribution rotative (2) peut pivoter d'au moins une longueur de section d'injection.

3. Dispositif selon l'une des revendications 1 ou 2, **caractérisé en ce que** la buse de distribution rotative (2) est disposée, en vue de réaliser une injection par le fond, du côté de l'éjection et en particulier du côté intérieur de la pièce moulée par rapport à la coquille de moule (4, 4').

4. Dispositif selon l'une des revendications précédentes, **caractérisé en ce que** la coquille de moule (4, 4') est assemblée à partir d'une plaque de moule du côté de l'injection et d'une autre du côté de l'éjection (5, 6) qui peuvent être séparées l'une de l'autre en vue de l'éjection des pièces en libérant la pièce moulée.

5. Dispositif selon la revendication 4, **caractérisé en ce que** l'au moins une alimentation (1) est logée dans la plaque de moule du côté de l'injection (6).

6. Dispositif selon l'une des revendications 4 ou 5, **caractérisé en ce que** l'au moins une buse de distribution rotative (2) est logée dans la plaque de moule du côté de l'éjection (5).

7. Dispositif selon l'une des revendications précédentes, **caractérisé en ce que** l'alimentation (1) est réalisée sous la forme d'une buse chauffante ou d'une canal froid.

8. Dispositif selon l'une des revendications précédentes, **caractérisé en ce qu'**en vue de la distribution de la matière plastique en fusion à plusieurs buses de distribution rotatives (2), un distributeur, par exemple un distributeur à canal chaud, est disposé au niveau de la plaque de moule du côté de l'injection (6).

9. Dispositif selon l'une des revendications précédentes, **caractérisé en ce que** la buse de distribution rotative (2) est supporté avec possibilité de rotation dans une douille de palier (13) dans une partie de son côté orienté à l'opposé de la plaque de moule du côté de l'éjection (5).

10. Dispositif selon l'une des revendications précédentes, **caractérisé en ce que** la buse de distribution rotative (2) inclut dans le sens de son extension longitudinale, de préférence au niveau de son axe longitudinal, un canal d'éjecteur (8) intérieur, dans lequel est logé un éjecteur de culot d'injection (9) destiné à éjecter le culot d'injection hors de l'au moins un canal d'écoulement (3, 3') de la buse de distribution rotative (2).

11. Dispositif selon la revendication 10, **caractérisé en ce que** l'éjecteur de culot d'injection (9) est disposé de façon coulissante dans le sens longitudinal dans le canal d'éjecteur (8).

12. Dispositif selon la revendication 11, **caractérisé en ce que** le canal d'éjecteur (8) peut se mettre en prise, dans la zone d'extrémité de l'éjecteur de culot d'injection (9) opposée à la plaque de moule du côté de l'éjection (5), dans au moins un creux (11) s'inscrivant latéralement dans la buse de distribution rotative (2) et traversant de préférence la buse de distribution rotative (2).

13. Dispositif selon la revendication 12, **caractérisé en ce que** l'éjecteur de culot d'injection (9) est retenu par un logement d'éjecteur (10) qui convient pour l'actionnement de l'éjecteur de culot d'injection (9), et ainsi pour la translation longitudinale de celui-ci le long du canal d'éjecteur (8), le logement d'éjecteur (10) se mettant en prise dans le creux (11).

14. Dispositif selon la revendication 13, **caractérisé en ce que** l'évidement (12) de la buse de distribution rotative (2) est en forme de coin ou de double coin, de telle façon que la rotation de la buse de distribution rotative (2) ne soit pas empêchée bien que le logement d'éjecteur (10) soit supporté de façon rigide.

15. Dispositif selon l'une des revendications précédentes, **caractérisé en ce qu'**une éjection des pièces moulées hors des coquilles de moule (4, 4') est synchronisée avec l'éjection du culot d'injection.

16. Dispositif selon l'une des revendications précédentes, **caractérisé en ce qu'**un vérin hydraulique ou pneumatique est utilisé comme générateur de rotation pour la buse de distribution rotative (2).

17. Dispositif selon la revendication 16, **caractérisé en ce que** la force nécessaire à la rotation de la buse de distribution rotative (2) peut être transmise au moyen d'une articulation tournante (12) ou d'une crémaillère.

18. Dispositif selon l'une des revendications 16 ou 17, **caractérisé en ce que** l'au moins un générateur de rotation de l'au moins une buse de distribution rotative (2) est relié en communication de signaux avec une commande centrale du dispositif, de préférence la fonction de tire-noyaux de la commande de la machine de moulage par injection.

19. Procédé pour la fabrication de pièces moulées au moyen d'un procédé de moulage par injection, dans lequel une matière plastique fondue est amenée par au moins une alimentation (1) et pour chaque alimentation au moins un canal de sortie (3, 3') guidé dans une buse de distribution rotative (2) vers au moins un point d'injection d'une coquille de moule (4, 4'), l'au moins un canal de sortie (3, 3') de l'au moins une buse de distribution rotative (2) étant écarté par rotation de la zone de l'au moins un point d'injection de l'au moins une coquille de moule (4, 4') après une opération de fabrication,
**caractérisé en ce que** l'au moins un canal de sortie (3, 3') est recouvert, entre une entrée de buse d'injection (7) et une ouverture extérieure dans le sens radial correspondante du canal de sortie (3, 3'), par le matériau de la buse de distribution rotative (2), afin de dévier la matière plastique en fusion qui s'écoule pour réaliser une injection par le fond.

20. Procédé selon la revendication 19, **caractérisé en ce que** la buse de distribution rotative (2) pivote sur au moins une longueur de section d'injection.

21. Procédé selon l'une des revendications 19 ou 20, **caractérisé en ce que** l'injection est effectuée du côté de l'éjection et en particulier du côté intérieur de la pièce moulée par rapport à la coquille de moule (4, 4').

22. Procédé selon l'une des revendications 19 à 21, **caractérisé en ce que** l'outil de moulage par injection composé d'une plaque de moule du côté de l'injection et d'une autre du côté de l'éjection (5, 6) est ouvert après l'injection et la pièce moulée est retirée.

23. Procédé selon la revendication 22, **caractérisé en ce qu'**après l'ouverture de l'outil de moulage par injection, le culot d'injection restant dans l'au moins un canal de sortie (3, 3') est éjecté en direction de l'alimentation (1) par la translation longitudinale d'un éjecteur de culot d'injection (9) logé avec possibilité de translation longitudinale dans la buse de distribution rotative (2).

24. Procédé selon la revendication 23, **caractérisé en ce que** l'éjection de la pièce et l'éjection du culot d'injection sont effectuées de façon synchrone.
